# EUROPEAN PATENT APPLICATION

(11) **EP 1 544 650 A1**
(43) Date of publication of application: **22.06.2005**
(21) Application number: 03787823.8
(22) Date of filing: 13.08.2003
(51) Int. Cl.: G02B 6/30

(54) **COUPLING SYSTEM BETWEEN DIELECTRIC OPTICAL GUIDES AND PLANAR PHOTONIC CRYSTAL GUIDES**

(30) Priority: 14.08.2002 ES 200201931
(71) Applicant: Universidad Politecnica De Valencia, 46022 Valencia (ES)
(72) Inventor: MARTI SENDRA, Javier, Univ. Politécnica Valencia, 46022 Valencia (ES); MARTINEZ ABIETAR, Alejandro, Univ. Polit. Valencia, 46022 Valencia (ES); SANCHIS KILDERS, Pablo, Univ. Politecnica Valencia, 46022 Valencia (ES)
(74) Representative: Temino Ceniceros, Ignacio
(86) International application number: PCT/ES2003/000421
(87) International publication number: WO 2004/017113

(57) **Abstract**

The invention relates to a method of optimising signal coupling between a dielectric guide and a photonic crystal guide. The inventive method is based on introducing point defects into a coupling structure that is required to adapt the width between both guides. The number and characteristics of said defects depend on both the characteristics of the coupling structure and the photonic crystal and dielectric guides. By introducing said defects into the aforementioned structure, the coupling is optimised within a wide range of frequencies, thereby enabling optical signals to be introduced into or extracted from any device that is made from photonic crystals without involving a drop in performance owing to inefficient coupling

## Description

### OBJECT OF THE INVENTION

The present invention consists of a technique that optimises the efficiency of the signal coupling between dielectric optical guides and optical guides made from planar photonic crystals. The technique is based on the introduction of point defects into the appropriate positions inside a coupling structure that is also made from photonic crystal. Said coupling structure adapts solely the widths of the dielectric input (or output) with the guide made from photonic crystal. The technique proposed optimises efficiency in the transfer of optical power between a dielectric optical guide and a photonic crystal guide. The number of defects as well as their characteristics depend both on the characteristics of the coupling structure and on the characteristics of the dielectric guide and of the photonic crystal guide.

The present invention's field of application is in any device based on two-dimensional photonic crystals. The invention provides essential features of novelty and significant advantages insofar as the enhancement of coupling efficiency regarding the coupling structure without defects, as well as regarding other structures proposed beforehand both in literature and in other patents.

### BACKGROUND TO THE INVENTION

Photonic crystals consist of materials with a dielectric constant that varies on a periodic basis in one (1D), two (2D) or three dimensions (3D). This periodicity gives rise to the appearance of frequency bands in which signal propagation is not permitted inside the crystal. These forbidden bands are commonly referred to in English as Photonic Band Gap (PBG). Control of light propagation is achieved through the creation of defects that break crystal periodicity. The creation of linear defects means that guided modes appear within the forbidden band allowing for the propagation of light solely within the defect created. Although the total control of the light is achieved with 3D photonic crystals, the control of the light in three dimensions may also be achieved with 2D planar photonic crystals, thus reducing manufacturing costs and complexity. In this case, the light is confined within a perpendicular direction to the surface of the crystal when the dielectric constant of the materials above and below the crystal is less than the dielectric constant of the defect created in the crystal.

In planar (2D) photonic crystals, the material's refraction index varies periodically according to a specific two-dimensional grid on a surface, whilst it has no periodicity in the dimension that is perpendicular to the plane. It is considered that the wave vector of the signals propagated is contained within the plane of the crystal and has no component that is perpendicular to it. It is furthermore considered that the field does not vary in the direction that is perpendicular to the plane of the crystal. The most common implementations consist of air gaps in a substratum with a refraction index that is significantly greater than that of air, or otherwise, formed by a network of dielectric columns spaced at regular intervals as per a grid constant. The characteristics of the forbidden band are determined by the value of the grid constant as well as by the radius, height and contrast of refraction indices between the gaps or columns and the substratum that surrounds them. The width of the forbidden band increases as said contrast of refraction indices increases. The creation of linear defects is performed by eliminating a line of gaps or columns, so forming a photonic crystal guide. The linear defect gives rise to a confined mode whose frequencies are inside the forbidden band. Said frequencies are only permitted in the linear defect and not in the rest of the crystal, whereby the mode only exists in the region of the defect that acts as waveguide.

The main advantages of devices based on photonic crystal are a major reduction in their size allowing for the development of optical circuits with a high level of integration and the possibility of implementing curved guides with radiuses in the order of the wave length of the signal that is propagated without significant losses, which is essential to the development of microphotonics. Nevertheless, one of the key aspects involves the high coupling losses that appear both when attempts are made to introduce light into the photonic crystal circuit by means of a dielectric guide as when light is to be extracted from it towards a dielectric guide. The origin of these losses is due to the different spatial width and impedance of the mode that is propagated in both structures as well as the different nature of the light propagation mechanism. The propagation of light in dielectric guides is achieved by total internal reflection thanks to the difference in refraction indices between the nucleus and the layers surrounding it. On the other hand, the propagation of light in photonic crystal guides is achieved by exciting Bloch modes that are guided along the defect. This difference may be understood as a mismatch between the impedances of both guides, leading to an increase in reflection in the interface between them, which weakens coupling efficiency both at the input and at the output.

Different structures have been propounded recently for improving coupling efficiency. The patent with reference US6381389 furthers a coupling technique and structure based on the use of a prism-shaped photonic crystal without defects. The coupling technique is based on exploiting the highly dispersive nature of the crystal that gives rise to a phenomenon known as superprism, producing a significant reduction (or increase, as desired) of the width of the beam of light. However, the main drawback of this structure is the high coupling losses it registers.

A further structure proposed is the use of a coupler with a diffraction grid that allows for coupling the light of an optic fibre to a photonic crystal guide. This technique's main drawback is that the light must be introduced or extracted on a perpendicular plane to the device in question, which hinders its integration. A further proposal has involved the gradual reduction of the width of the dielectric guide down to zero forming a wedge-shaped structure. This structure is inserted within the photonic crystal guide whereby it is as if the signal radiates out from the dielectric guide into the photonic crystal guide. However, this solution means that the refraction index of the dielectric guide has to be different to the refraction index of the material of the photonic crystal guide. Moreover, the wedge-type structure does not permit coupling on dielectric guides with highly contrasting refraction indices.

In order to resolve these problems, it has been proposed to perform the coupling with structures made directly from the photonic crystal. One of the techniques proposed and with which good results have been achieved is the gradual variation of the radius of the crystal columns. However, this solution requires the width of the dielectric guide and of the photonic crystal guide to be similar. In addition, the structure is complicated to produce, as very high manufacturing accuracy is required.

A more versatile structure involves the gradual variation of the width of the photonic crystal guide removing the columns necessary to adapt the width of said guide to that of the dielectric guide. This structure manages to couple the light in a wide range of frequencies and do so furthermore with a very short coupling length; nevertheless, the mean coupling efficiency in the operating band is relatively low, for although there is adaptation of the mode's transverse width, there is no adaptation of the mode's impedances.

### DESCRIPTION OF THE INVENTION

The purpose of this invention is a coupling technique based on the introduction of one or more point defects of specific characteristics into the aforementioned coupling structure. The introduction of the defects acts as an impedance adaptor thereby optimising the coupling efficiency between the dielectric guide and the photonic crystal guide.

The number of defects as well as the characteristics of each one of them will depend both on the characteristics of the dielectric and photonic crystal guides and on the characteristics of the coupling structure used to adapt the widths between both guides. This technique considerably improves coupling efficiency in a wide range of frequencies with regard to the structure without defects and, moreover, it is useful for both introducing and extracting light from devices made from planar photonic crystals. Furthermore, this technique optimises coupling not only to standard photonic crystal guides but also to other kinds of photonic crystal guides, such as those based on coupled cavities (Coupled-Resonator Optical Waveguide, CROW).

### DESCRIPTION OF THE DRAWINGS

In order to complement the description provided herein and for the purpose of furthering a better understanding of the characteristics of the invention, as per a preferred embodiment of the practical execution of the same, inclusion is made as an integral part of said description of a set of drawings, in which for illustrative and non-restrictive purposes depiction has been made of the following:
Figure 1. This shows the coupling between a dielectric guide of width *w* and a photonic crystal guide with grid constant *a* and cylinder radius *R*. The coupling device consists of a radius defect different to that of the crystal's columns and inserted within the coupling structure necessary for adapting the widths of the dielectric guide and the photonic crystal guide.
Figure 2. This presents a three-dimensional depiction with the coupling technique propounded, albeit this time with two defects.
Figure 3. This shows a horizontal cross-section of the dielectric guide.
Figure 4. This shows a vertical cross-section of figure 2 in which the two defects may be observed in different positions and with a different radius.
Figure 5. This shows the response in transmission for the implementation portrayed in Figure 1 in terms of the width of the dielectric guide standardised by the grid constant, the radius of the defect standardised by the radius of the crystal's columns and the relative position of the defect on the z-axis also standardised by the crystal's grid constant. In this latter case, the graph inserted shows the point of origin applied.
Figure 6. This shows the response in standardised frequency in transmission and reflection for the implementation portrayed in Figure 1. The reflected power measured is solely that which is reflected in the dielectric guide.

### PREFERRED EMBODIMENT OF THE INVENTION

In order to undertake the detailed description that follows of the preferred embodiment of the present invention, constant reference will be made to the drawings in the Figures, whereby the same numerical references have been used for identical or similar parts.

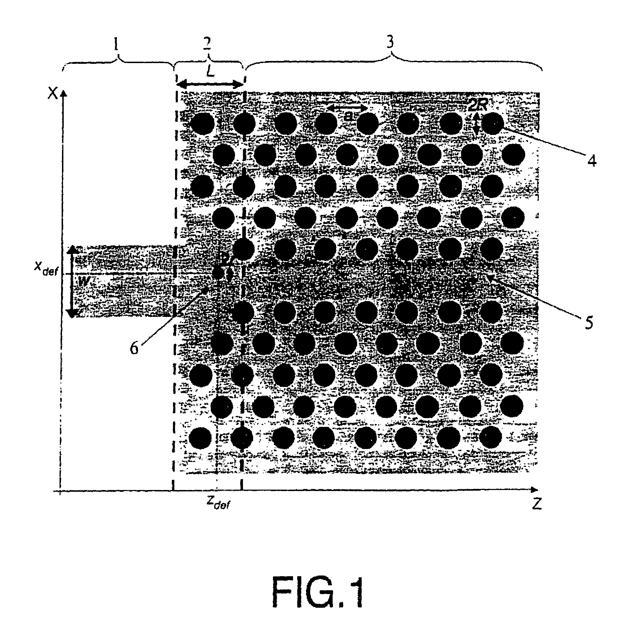

Figure 1 provides a schematic view of the coupling structure for a specific case based on the introduction of a defect (6) into the coupling structure (2) of length *L* necessary for achieving the adaptation of the widths between the dielectric guide (1) and the photonic crystal guide (3). It may be noted how the adaptation structure (2) is formed by eliminating the appropriate cylinders in order to increase the width of the photonic crystal guide up to a width similar to that of the dielectric guide. The photonic crystal consists of a series of cylinders (4) arranged according to two-dimensional triangular periodic grid with grid constant *a*. The radius of the cylinders is *R* and they consist of a material with a refraction index different to that of the medium (5) that surrounds the columns. The coupling technique is valid both for inserting light from a dielectric guide into a photonic crystal guide as for extracting light from a photonic crystal guide into a dielectric guide. Likewise, although the specific structure described here comprises a two-dimensional grid of cylinders with a high refraction index on a planar substratum with a lower refraction index, the coupling technique is equally valid in the case of a structure formed by a two-dimensional grid of air gaps in a substratum with a high refraction index, as the coupling technique's underlying physical principles are the same. In both cases it is considered that the input or output dielectric optical guide is made from the same material that comprises the substratum of the photonic crystal.

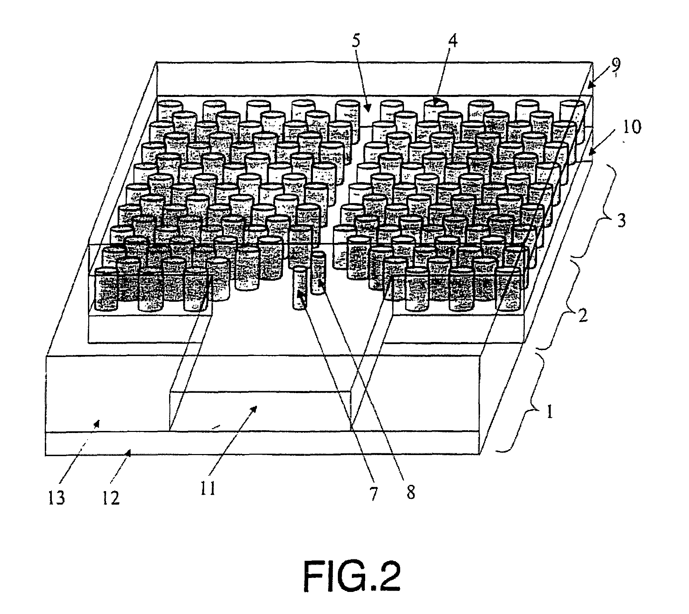

The number and arrangement of the defects may be different to that shown in Figure 1. Likewise, the value of the refraction index may also be different in each one of the possible defects. An example with an alternative distribution of defects is shown in Figure 2 in a three-dimensional depiction. In this case, we may observe that two defects (7,8) have been introduced in order to maximise coupling. The crystal has one dielectric layer a bove (9) and a nother one below (10). The refraction index for these two layers must bei dentical for reasons of symmetry and less than the refraction index of the material (5) comprising the waveguides in the crystal. Confinement is thus ensured in the signal's transverse direction when it is propagated along the guide created in the crystal. The height of the columns is a design parameter that will depend on the specific characteristics of the photonic crystal.

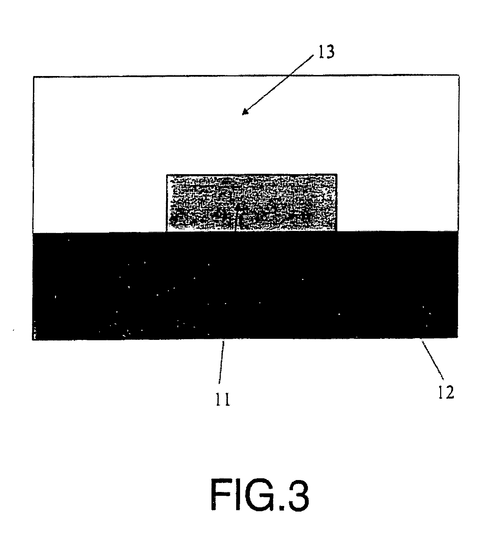

The cross section of the dielectric guide is shown in Figure 3. The dielectric guide consists of a nucleus (11) surrounded by an upper (13) and lower (12) layer. The refraction index of the nucleus (11) must be greater than the refraction index of the upper (13) and lower (12) layers to ensure guiding by means of total internal reflection. Moreover, the refraction index for the upper (13) and lower (12) layers may be different provided that the aforementioned condition is fulfilled.

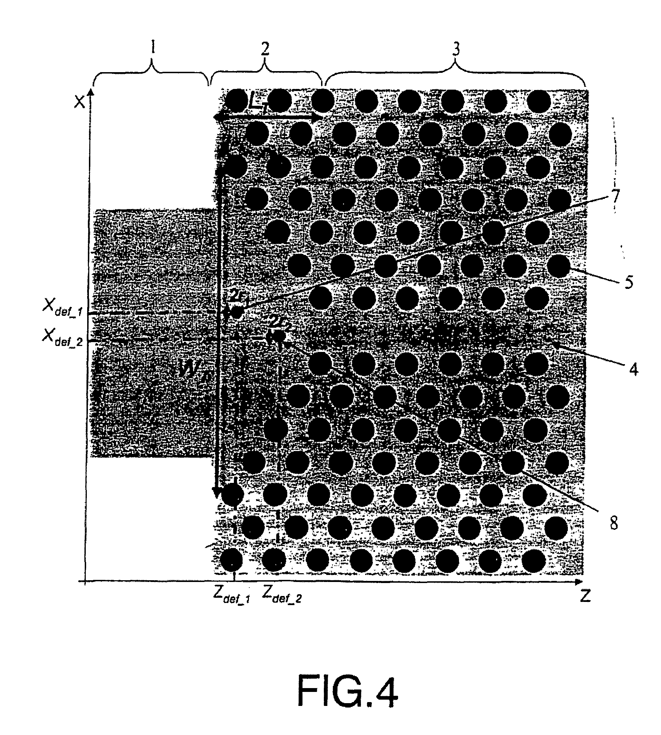

Figure 4 shows a three-dimensional cross section of the structure depicted in Figure 2. In this case, one may observe the introduction of the two defects (7,8) with different radii *r*_{*1*} and *r*_{*2*.} Furthermore, the relative position within the coupling structure is different being (*X*_{*def_1*}*, Z*_{*def_1*}*)* for defect (7) and (*X*_{*def_2*}, *Z*_{*def_2*}*)* for defect (8). The number of defects as well as their characteristics will depend both on the size of the adaptation structure *L*_{*T*} and on its width *W*_{*T*.}

A possible method for choosing the most appropriate number and position of defects is to perform a sweeping with a single defect on the z-axis maintaining it on the specular axis of symmetry of the guide, with the direction of the axes being as shown in Figure 4. The transmission response obtained has an oscillating shape with a series of peaks of different amplitude on the z-axis. Coupling efficiency may then be maximised by suitably fitting the defects into these positions and subsequently obtaining the optimum radius for each one of them.

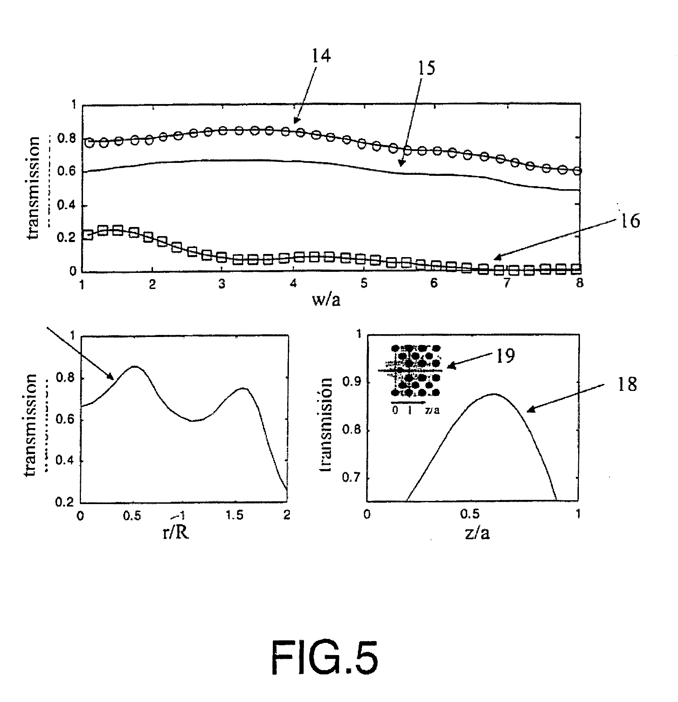

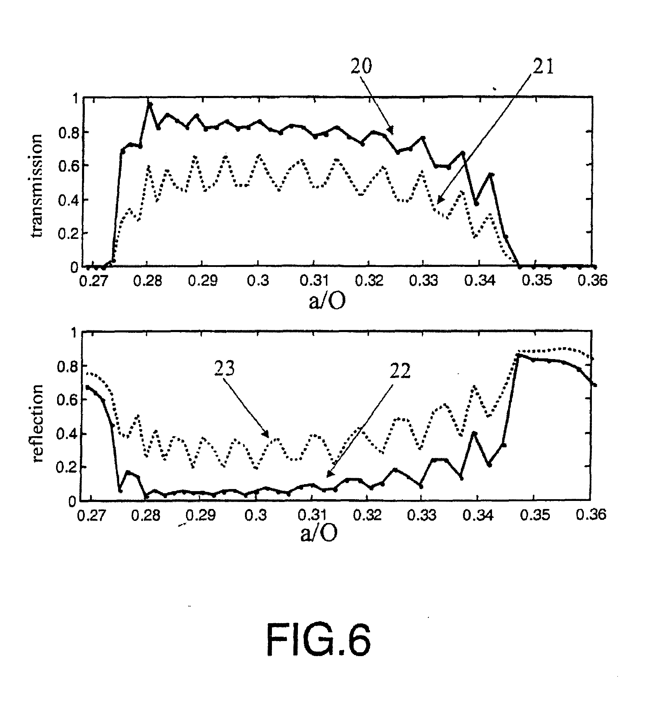

In order to demonstrate the operation of the technique, presentation is made of the results obtained for the specific case in Figure 1. Figures 5 and 6 show the results obtained by simulation employing the finite-difference time-domain (FDTD). Coupling length *L* is 0.5 µm. The wavelength considered is 1.55 µm, a value commonly employed for optical communications. The crystal consists of columns with a refraction index of 3.4 that emulates a Silicon (Si) material for the wavelength considered. The material that surrounds the columns registers a refraction index of 1.45 corresponding to a Silicon Oxide (SiO₂) material for the wavelength considered. The columns are arranged in the manner of a triangular grid with a grid constant, *a*, of 465 nm and a radius of 0.2*a*. The crystal with these characteristics presents a forbidden band in the standardised range of frequencies between 0.26 *a*/λ and 0.36 *a*/λ. The input dielectric guide has a refraction index of 1.45. The material above and below the guide is air.

Figure 5 shows the transmission response in terms of the width of the dielectric guide standardised by the grid constant (14-16), the radius of the defect standardised by the radius of the columns that form the crystal (17) and the relative position of the defect on the z-axis standardised by the grid constant (18). The input signal is considered to be a flat monochromatic wave whose wavelength is 1.55 µm. At said wavelength there are guided modes both in the dielectric guide and in the photonic crystal guide. In the case of the width standardised to the grid constant, the coupling structure is shown with defect (14), without defect (15) and for direct coupling without any coupling structure (16). It is observed that the transmission for (14) exceeds the other two cases, exceeding 80% for a wide range of width values for the input dielectric guide. An optimum is achieved for 3.22*a*, which corresponds to a width of 1.5 µm for the grid constant value considered.

The optimum radius for the defect is obtained on the basis of the graph (17) wherein one may observe the variation of transmission with the radius of the defect considering the width of the optimum dielectric guide obtained previously. It is observed that the transmission peak is given by 0.5*R*, which was the value used to find the prior results (14-16).

On the basis of the optimum radius values of the defect and width of the dielectric guide, the optimum position standardised by the grid constant on the *x* and z axes has been obtained, with their direction being that shown in Figure 1. The optimum position on the *x*-axis coincides with the structure's specular axis of symmetry, as is observed in the graph (18). On the other hand, the optimum position on the z -axis is 0.6*a*, taking into account the origin of the coordinates shown in (19). In this case, transmission improves from 84.6% to 87.5% regarding the value of 0.5*a* considered previously.

Nevertheless, the above results have been obtained for a single wavelength, namely 1.55 µm. Figure 6 shows the frequency spectrum for the response in transmission (20, 21) and in reflection in standardised linear units (22, 23) with this latter case solely considering reflection in the dielectric guide. The results for the coupling structure with defect correspond to (20) and (22) whilst results (21) and (23) correspond to the coupling structure without defect. It is observed that the introduction of the defect significantly improves transmission (20) with regard to the case without defect (21). Consequently, reflection in the dielectric guide is also much lower for the coupling structure with defect (22) with regard to the structure without defect (23). Transmission encompasses the whole range of standardised frequencies for which there exists the mode that appears within the crystal's forbidden band and which is propagated in the photonic crystal guide. Mean transmission within this frequency margin is 78.5%, which is a 30% improvement on the value obtained by means of the coupling structure without defect.

## Claims

1. System of coupling between dielectric optical guides and planar photonic crystal guides, **characterised by** the fact that it consists in the introduction of point defects in any kind of coupling structure necessary for adapting the width between both guides, with it foreseen that there may be any number of defects and their characteristics: radius, dielectric constant, relative position and height.

2. System of coupling between dielectric optical guides and planar photonic crystal guides, according to claim 1, **characterised by** the fact that the coupling structure for adapting t he width between both guides m ay be any 1 ength, width and shape, depending o n the characteristics o f both the dielectric guide and the photonic crystal guide.

3. System of coupling between dielectric optical guides and planar photonic crystal guides, according to claim 1, **characterised by** the fact that with any photonic crystal, that is with any kind of grid, either triangular or square, it furthermore allows for any value of grid constant, radius and height of the cylinders and contrast of indices between the material of the columns, the material surrounding the columns and the material above and below the crystal.

4. System of coupling between dielectric optical guides and planar photonic crystal guides, according to claim 1, **characterised by** the fact that the dielectric guide may have any kind of configuration (width and height of the nucleus and layers surrounding it) and refraction indices, including also optic fibre.

5. System of coupling between dielectric optical guides and planar photonic crystal guides, according to claim 1, **characterised by** the fact that the photonic crystal guide may be of any width and type, including guides based on coupled cavities (CROW).

6. System of coupling between dielectric optical guides and planar photonic crystal guides, according to the foregoing claims, **characterised by** the fact that it includes a method for choosing the optimum number of defects as well as the characteristics of each one of them, both for introducing the light from a dielectric guide into a photonic crystal guide as for extracting the light from a photonic crystal guide into a dielectric guide.
